# EUROPÄISCHE PATENTSCHRIFT

(11) **EP 3 356 203 B1**
(45) Veröffentlichungstag und Bekanntmachung des Hinweises auf die Patenterteilung: **30.11.2022**
(21) Anmeldenummer: 16770483.2
(22) Anmeldetag: 21.09.2016
(51) Int. Cl.: B62D 15/02, G08G 1/14

(54) **VERFAHREN ZUM BESTIMMEN EINER PARKFLÄCHE ZUM PARKEN EINES KRAFTFAHRZEUGS, FAHRERASSISTENZSYSTEM SOWIE KRAFTFAHRZEUG**
METHOD FOR DETERMINING A PARKING SURFACE FOR PARKING A MOTOR VEHICLE, DRIVER ASSISTANCE SYSTEM, AND MOTOR VEHICLE
PROCÉDÉ DE DÉTERMINATION D'UNE ZONE DE STATIONNEMENT POUR STATIONNER UN VÉHICULE AUTOMOBILE, SYSTÈME D'ASSISTANCE À LA CONDUITE ET VÉHICULE AUTOMOBILE

(30) Priorität: 30.09.2015 DE 102015116542
(43) Veröffentlichungstag der Anmeldung: 08.08.2018
(73) Patentinhaber: Valeo Schalter und Sensoren GmbH, 74321 Bietigheim-Bissingen (DE)
(72) Erfinder: BLINKLE, Frank, 74321 Bietigheim-Bissingen (DE)
(74) Vertreter: Pothmann, Karsten
(86) Internationale Anmeldenummer: PCT/EP2016/072411
(87) Internationale Veröffentlichungsnummer: WO 2017/055154

(56) Entgegenhaltungen:
- EP-A1- 2 623 398
- EP-A2- 2 982 561
- EP-B1- 2 623 398
- US-A1- 2011 087 406

## Beschreibung

Die vorliegende Erfindung betrifft ein Verfahren zum Bestimmen einer Parkfläche zum Parken eines Kraftfahrzeugs, bei welchem das Kraftfahrzeug relativ zu einer potentiellen Parklücke bewegt wird, während des Bewegens des Kraftfahrzeugs relativ zu der potentiellen Parklücke anhand von Sensordaten zumindest eines Sensors des Kraftfahrzeugs eine Fahrbahnmarkierung und zumindest ein die potentielle Parklücke begrenzendes Objekt erkannt werden und anhand der erkannten Fahrbahnmarkierung und des zumindest einen Objekts die Parkfläche innerhalb der potentiellen Parklücke bestimmt wird. Darüber hinaus betrifft die vorliegende Erfindung ein Fahrerassistenzsystem für ein Kraftfahrzeug. Schließlich betrifft die vorliegende Erfindung ein Kraftfahrzeug.

Das Interesse richtet sich vorliegend insbesondere auf Fahrerassistenzsysteme, welche den Fahrer beim Einparken des Kraftfahrzeugs in eine Parklücke unterstützen. Aus dem Stand der Technik sind bereits Fahrerassistenzsysteme bekannt, welche mit Hilfe von entsprechenden Sensoren Parklücken beziehungsweise freie Stellplätze erkennen können und den Fahrer beim Einparkvorgang unterstützen. Hierbei kann der Fahrer sowohl beim Längsparken als auch beim Querparken unterstützt werden. Darüber hinaus sind Fahrerassistenzsysteme bekannt, die das Kraftfahrzeug bei dem Einparkvorgang semi-autonom manövrieren. Hierbei übernimmt das Fahrerassistenzsystem die Lenkung des Kraftfahrzeugs und der Fahrer betätigt weiterhin das Gaspedal und die Bremse. Ferner sind bereits Fahrerassistenzsysteme bekannt, die ein autonomes beziehungsweise voll-autonomes Manövrieren des Kraftfahrzeugs ermöglichen.

Um das Kraftfahrzeug entsprechend manövrieren zu können, ist es erforderlich, eine Parkfläche zu bestimmen, auf welcher das Kraftfahrzeug eingeparkt werden kann. Hierzu kann das Kraftfahrzeug beispielsweise zunächst an einer potentiellen Parklücke vorbeibewegt werden. Während des Vorbeibewegens kann mit einem oder mehreren Sensoren der Umgebungsbereich des Kraftfahrzeugs erfasst werden. Bei den Sensoren kann es sich beispielsweise um Ultraschallsensoren oder Kameras handeln. Anhand der Sensordaten der Sensoren kann dann die potentielle Parklücke erkannt werden und die Parkfläche innerhalb der potentiellen Parklücke definiert werden. Anschließend kann eine Fahrtrajektorie bestimmt werden, entlang welcher das Kraftfahrzeug in die Parkfläche manövriert wird. Zur Erkennung von potentiellen Parklücken werden beispielsweise Objekte berücksichtigt, welche die Parklücke begrenzen. Zudem ist es bekannt, Fahrbahnmarkierungen beziehungsweise Parkflächenmarkierungen zu erkennen.

Hierzu beschreibt die DE 10 2007 047 362 A1 ein Verfahren zur Steuerung eines Parkassistenzsystems für Fahrzeuge. Dabei wird mit einer Umfelderkennungssensorik ein Parkraum identifiziert und vermessen. Zudem werden mit einer Kamera und einer Bildverarbeitungseinheit Markierungen im Bereich des Parkraums für das Fahrzeug erfasst und analysiert. Des Weiteren werden mit einer Auswertung die Sensordaten der Umfelderkennungssensorik, die die Abstände zu den Hindernissen im Bereich des Parkraums betreffen, und die Bilddaten der Bildverarbeitungseinheit bezüglich der analysierten Markierungen zu einer Steuerung des Parkassistenzsystems herangezogen. Ferner ist in der DE 10 2009 005 554 A1 ein Verfahren zur Auswahl einer Parklücke bei einer durch ein kamerabasiertes Verfahren bestimmten komplexen Parkplatzsituation, wobei die Parkplatzsituation mindestens eine mögliche Parklücke aufweist, beschrieben. Dabei werden die möglichen Parklücken von vorgegebenen Auswahlkriterien bewertet, wobei jedem Auswahlkriterium eine Priorität zugeordnet wird. Ein erstes Kriterium kann dabei umfassen, dass der Raum zwischen zwei Parkplatzmarkierungen ausreichend ist. Ein weiteres Kriterium kann umfassen, dass der Raum zwischen einer Parkplatzmarkierung und einem erkannten Hindernis ausreichend groß ist. Ferner kann ein Kriterium umfassen, dass der Raum zwischen zwei erkannten Hindernissen oder seitlich eines Hindernisses ausreichend groß ist.

Die US 2011/0087406 A1 zeigt die Merkmale des Oberbegriffs des Anspruchs 1 und beschreibt, dass eine Parkfläche vor und während dem Parkvorgang mittels Sensoren vermessen wird und eine Abweichungsbestimmung zwischen der Orientierung von zwei beabstandeten Objekten erfolgt, um die Orientierung der Parkfläche zu bestimmen.

Es ist Aufgabe der vorliegenden Erfindung, eine Lösung aufzuzeigen, wie eine Parkfläche zum Parken eines Kraftfahrzeugs zuverlässiger bestimmt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Ausführungen der Erfindung sind Gegenstand der abhängigen Ansprüche, der Beschreibung und der Figuren.

Ein erfindungsgemäßes Verfahren dient zum Bestimmen einer Parkfläche zum Parken eines Kraftfahrzeugs. Dabei wird das Kraftfahrzeug relativ zu einer potentiellen Parklücke bewegt. Während des Bewegens des Kraftfahrzeugs relativ zu der potentiellen Parklücke werden anhand von Sensordaten zumindest eines Sensors des Kraftfahrzeugs eine Fahrbahnmarkierung und zumindest ein Objekt, welches die potentielle Parklücke begrenzt, erkannt. Anhand der erkannten Fahrbahnmarkierung und des zumindest eines Objekts wird dann die Parkfläche innerhalb der potentiellen Parklücke bestimmt. Ferner wird anhand der Fahrbahnmarkierung eine Orientierung für die Parkfläche bestimmt, eine Orientierung des Objekts wird bestimmt und die Parklücke wird in Abhängigkeit von einem Vergleich der bestimmten Orientierung für die Parkfläche und der bestimmten Orientierung des Objekts bestimmt. Die Fahrbahnmarkierung ist dabei als Parkflächenmarkierung ausgebildet.

Mit Hilfe des Verfahrens soll eine Parkfläche bestimmt werden, auf welcher das Kraftfahrzeug geparkt werden kann. Dazu wird zunächst eine potentielle Parklücke in einem Umgebungsbereich beziehungsweise der Umgebung des Kraftfahrzeugs erkannt und innerhalb der potentiellen Parklücke wird dann die Parkfläche definiert. Zum Erkennen der potentiellen Parklücke wird das Kraftfahrzeug relativ zu der potentiellen Parklücke bewegt. Dabei kann es vorgesehen sein, dass das Kraftfahrzeug an der potentiellen Parklücke vorbeibewegt wird. Die potentiellen Parklücke kann auch erkannt werden, während das Kraftfahrzeug in Richtung der potentiellen Parklücke oder in die potentiellen Parklücke hinein bewegt wird. Während des Bewegens des Kraftfahrzeugs wird mit zumindest einem Sensor des Kraftfahrzeugs fortlaufend der Umgebungsbereich des Kraftfahrzeugs überwacht. Bei dem zumindest einen Sensor kann es sich beispielsweise um eine Kamera handeln, welche Bilder beziehungsweise eine Bildsequenz bereitstellt, die den Umgebungsbereich beschreiben. Grundsätzlich kann es auch vorgesehen sein, dass mehrere Kameras verwendet werden, die beispielsweise verteilt an dem Kraftfahrzeug angeordnet sind. Bei dem Sensor kann es sich auch um einen Radarsensor, einen Lidar-Sensor oder um einen Laserscanner handeln. Anhand der Sensordaten des Sensors beziehungsweise der Bilder, die von der Kamera bereitgestellt werden, können dann Objekte erkannt werden, welche die potentielle Parklücke begrenzen. Hierbei kann es sich beispielsweise um geparkte Fahrzeuge handeln. Ferner kann es sich beispielsweise um einen Bordstein oder um eine Wand handeln, welche die potentielle Parklücke begrenzt. Darüber hinaus werden anhand der Sensordaten beziehungsweise der Bilder Fahrbahnmarkierungen erkannt. Die Fahrbahnmarkierungen können auch mithilfe des Radarsensors, des Lidar-Sensors oder des Laserscanners erkannt werden. Der Sensor kann dann beispielsweise mittels eines entsprechenden Algorithmus die Fahrbahnmarkierungen anhand der Sensordaten des Sensors erkennen. Bei den Fahrbahnmarkierungen kann es sich insbesondere um Parkflächenmarkierungen handeln. Falls die potentielle Parklücke erkannt wurde, kann innerhalb der potentiellen Parklücke eine Parkfläche definiert werden, welche dann zum Parken des Kraftfahrzeugs dient. Wenn das Kraftfahrzeug zumindest semi-autonom in die potentielle Parklücke manövriert wird, kann die Parkfläche die finale Parkposition beschreiben.

Erfindungsgemäß ist es nun vorgesehen, dass anhand der Fahrbahnmarkierung eine Orientierung für die Parkfläche bestimmt wird. Mit anderen Worten wird anhand der Fahrbahnmarkierung die Orientierung beziehungsweise eine Ausrichtung für die Parkfläche innerhalb der potentiellen Parklücke definiert. Hierbei wird berücksichtigt, dass die Parkfläche beziehungsweise die finale Parkposition genau anhand der Fahrbahnmarkierungen bestimmt werden kann. Diese Fahrbahnmarkierung ist Teil der Infrastruktur und gibt somit die Parkfläche präzise vor. Im Vergleich hierzu können die Objekte, die die Parklücke begrenzen, diese Parkfläche nicht genau definieren. Wenn es sich bei den Objekten um geparkte Fahrzeuge handelt, wurden diese mit einer gewissen Ungenauigkeit abgestellt. Zusätzlich der Orientierung der Parkfläche wird auch die Orientierung beziehungsweise die Ausrichtung des Objekts bestimmt. Anhand eines Vergleichs der bestimmten Orientierung für die Parkfläche und der bestimmten Orientierung des Objekts kann dann die Parkfläche definiert werden. Somit kann die Parkfläche auch zuverlässig definiert werden, wenn nur eine Fahrbahnmarkierung erkannt wird. Dies ist beispielsweise der Fall, wenn eine zweite Fahrbahnmarkierung nicht mehr genügend sichtbar ist. Dies ist beispielsweise der Fall, wenn die Fahrbahnmarkierung verdeckt ist oder abgenutzt ist.

Dabei kann sich die potentielle Parklücke beispielsweise zwischen dem Objekt und der Fahrbahnmarkierung befinden. Hierbei kann überprüft werden, ob die Orientierung für die Parkfläche mit der Orientierung des Objekts im Wesentlichen übereinstimmt. Ist dies beispielsweise nicht der Fall, kann es sich bei der Fahrbahnmarkierung nicht um eine Parkflächenmarkierung handeln. Zudem kann es der Fall sein, dass die Fahrbahnmarkierung falsch oder fehlerhaft erkannt wurde. Wenn die Orientierung für die Parkflächen und somit die Orientierung der Fahrbahnmarkierung im Wesentlich mit der Orientierung des Objekts übereinstimmt, kann davon ausgegangen werden, dass es sich bei der potentiellen Parklücke um einen freien Stellplatz für das Kraftfahrzeug handelt. Innerhalb der potentiellen Parklücke kann dann die Parkfläche bestimmt werden. Auf diese Weise kann die Parkfläche zuverlässig bestimmt werden.

Bevorzugt wird zum Vergleich der bestimmten Orientierung für die Parkfläche und der bestimmten Orientierung des zumindest einen Objekts ein Winkel zwischen einer Haupterstreckungsrichtung der Fahrbahnmarkierung und einer Haupterstreckungsrichtung des zumindest einen Objekts bestimmt. Anhand der Sensordaten beziehungsweise der Bilder der Kamera kann die Haupterstreckungsrichtung der Fahrbahnmarkierung bestimmt werden. Hierzu kann beispielsweise ein entsprechender Bilderkennungsalgorithmus verwendet werden, welcher Linien in dem Bild erkennen kann. Zudem kann beispielsweise mit einem entsprechenden Objekterkennungsalgorithmus die Haupterstreckungsrichtung des Objekts erkannt werden. Ferner kann ein Winkel zwischen der Haupterstreckungsrichtung der Fahrbahnmarkierung und der Haupterstreckungsrichtung des Objekts bestimmt werden. Somit kann auf einfache Weise die Ausrichtung der Parkfläche zu dem Objekt bestimmt werden.

In einer Ausführungsform wird die Parkfläche innerhalb der potentiellen Parklücke bestimmt, falls der bestimmte Winkel einen vorbestimmten Grenzwert unterschreitet. Insbesondere wenn es sich bei dem Objekt um ein geparktes Fahrzeug handelt, kann der Grenzwert so gewählt werden, dass typische Ungenauigkeiten beim Abstellen des Fahrzeugs nicht berücksichtigt werden. Somit kann auf einfache Weise überprüft werden, ob die Ausrichtung der Parkfläche beziehungsweise der Fahrbahnmarkierung und des Objekts im Wesentlichen übereinstimmen.

Weiterhin ist es vorteilhaft, wenn anhand der bestimmten Orientierung für die Parkfläche und der bestimmten Orientierung des zumindest einen Objekts ein Typ der potentiellen Parklücke erkannt wird. Der Typ der potentiellen Parklücke beschreibt insbesondere, ob es sich bei der potentiellen Parklücke um eine Parklücke zum Längsparken, zum Querparken oder zum Schrägparken handelt. Anhand der räumlichen Erstreckung der Fahrbahnmarkierung kann nun der Typ der potentiellen Parklücke bestimmt werden. In Abhängigkeit davon kann die Parkfläche innerhalb der potentiellen Parklücke definiert werden. Im Vergleich zu objektorientierten Systemen kann somit der Typ der Parklücke genau erkannt werden. Bei diesen objektorientierten Systemen kann beispielsweise nicht zwischen zwei nebeneinander angeordneten Parklücken zum Querparken und einer Parklücke zum Längsparken unterschieden werden.

In einer weiteren Ausgestaltung wird ein Abstand zwischen der Fahrbahnmarkierung und dem zumindest einen Objekt bestimmt und die Parkfläche wird zwischen der Fahrbahnmarkierung und dem zumindest einen Objekt bestimmt, falls der Abstand einen vorbestimmten Schwellenwert überschreitet. Der Schwellenwert für den Abstand zwischen der Fahrbahnmarkierung und dem Objekt kann anhand der Außenabmessungen des Kraftfahrzeugs definiert werden. Wenn nun der Abstand zwischen der Fahrbahnmarkierung und dem Objekt ausreichend ist und zudem die Orientierung der Fahrbahnmarkierung und des Objekts im Wesentlichen übereinstimmen, kann davon ausgegangen werden, dass es sich um eine Parklücke handelt. Innerhalb dieser Parklücke kann dann die Parkfläche definiert werden.

In einer weiteren Ausführungsform wird ein Abstand zwischen einem ersten Objekt und einem zweiten Objekt bestimmt, falls ein Abstand zwischen der Fahrbahnmarkierung und dem ersten Objekt und ein Abstand zwischen der Fahrbahnmarkierung und dem zweiten Objekt den Schwellenwert unterschreitet und die Parkfläche wird zwischen dem ersten Objekt und dem zweiten Objekt bestimmt, falls der Abstand zwischen dem ersten Objekt und dem zweiten Objekt den vorbestimmten Schwellenwert überschreitet. Mit anderen Worten können beispielsweise zwei Objekte und eine Fahrbahnmarkierung anhand der Sensordaten erkannt werden. Dabei kann der jeweilige Abstand zwischen den Objekten und/oder der Fahrbahnmarkierung bestimmt werden. Grundsätzlich kann zunächst der jeweilige Abstand zwischen den Fahrbahnmarkierung und den Objekten bestimmt werden. Falls dieser geringer als der Schwellenwert ist, kann der Abstand zwischen den zwei Objekten bestimmt werden. Überschreitet dieser den Schwellenwert, kann die Parkfläche zwischen den beiden Objekten definiert werden. Dabei kann es der Fall sein, dass die Fahrbahnmarkierung zwischen den beiden Objekten angeordnet ist. Anhand der Fahrbahnmarkierung kann dann die Orientierung der Parkfläche definiert werden. Hierbei kann es auch der Fall sein, dass die Fahrbahnmarkierung als Begrenzung für die Parkfläche ignoriert wird und die Parkfläche beispielsweise so definiert wird, dass die Fahrbahnmarkierung innerhalb der Parkfläche angeordnet ist. Somit kann auch auf diese Weise zuverlässig eine Parkfläche definiert werden.

In einer weiteren Ausgestaltung wird zum Bestimmen der Parkfläche eine räumliche Erstreckung der Fahrbahnmarkierung bestimmt und die Parkfläche wird in Abhängigkeit von der räumlichen Erstreckung ausgerichtet. Wie bereits erläutert, kann mit einem entsprechenden Objekterkennungsalgorithmus die räumliche Erstreckung der Fahrbahnmarkierung bestimmt werden. Hierbei kann zudem überprüft werden, ob die Fahrbahnmarkierung T-förmige Bereiche und/oder L-förmige Bereiche aufweist. Derartige Bereiche sind typisch für eine Parkflächenmarkierung, welche eine Parklücke begrenzen. Die Parkfläche wird je nach erkannter Fahrbahnmarkierung parallel zu dieser, seitlich zu dieser und/oder längs zu dieser festgelegt. Falls eine dieser Orientierungen nicht möglich ist, kann die Parkfläche zu dem Objekt ausgerichtet werden. Auf diese Weise kann die Parkfläche zuverlässig bestimmt werden.

In einer weiteren Ausführungsform wird die Fahrbahnmarkierung und das zumindest eine Objekt in eine digitale Umgebungskarte eingetragen, welche einen Umgebungsbereich des Kraftfahrzeugs beschreibt. In die digitale Umgebungskarte kann die relative Lage der Fahrbahnmarkierung und des zumindest einen Objekts bezüglich des Kraftfahrzeugs eingetragen werden. Zudem kann die relative Lage des zumindest einen Objekts zu der Fahrbahnmarkierung in die digitale Umgebungskarte eingetragen werden. Auf diese Weise kann ein Freiraum zwischen dem zumindest einen Objekt und der Fahrbahnmarkierung bestimmt werden. Damit kann bestimmt werden, ob dieser Freiraum eine potentielle Parklücke darstellt.

Ein erfindungsgemäßes Fahrerassistenzsystem für ein Kraftfahrzeug ist zum Durchführen eines erfindungsgemäßen Verfahrens ausgelegt. Das Fahrerassistenzsystem kann zumindest einen Sensor umfassen, der beispielsweise als Kamera, Radarsensor, Lidar-Sensor oder Laserscanner ausgebildet ist. Der Sensor kann eine entsprechende Auswerteeinrichtung zu Erkennen der Fahrbahnmarkierungen anhand der Sensordaten aufweisen. Wenn der Sensor eine Kamera ist, kann dieser insbesondere eine entsprechende Bildverarbeitungseinrichtung zum Erkennen von Objekten in den Bildern der Kamera zugeordnet sein. Es kann auch vorgesehen sein, dass das Fahrerassistenzsystem eine Mehrzahl von Sensoren beziehungsweise Kameras umfasst, die beispielsweise verteilt an dem Kraftfahrzeug angeordnet sind. Das Fahrerassistenzsystem kann ferner dazu ausgelegt sein, das Kraftfahrzeug zumindest semi-autonom in die Parklücke zu manövrieren. Dabei stellt die definierte Parkfläche die Endposition zum Einparken des Kraftfahrzeugs dar. Hier kann es vorgesehen sein, dass das Fahrerassistenzsystem einen Eingriff in die Lenkung des Kraftfahrzeugs vornimmt, um das Kraftfahrzeug entlang der berechneten Fahrtrajektorie in die Parklücke einzuparken. Zudem kann es vorgesehen sein, dass das Kraftfahrzeug mittels des Fahrerassistenzsystems voll-autonom manövriert wird. Hierbei übernimmt das Fahrerassistenzsystem zudem einen Eingriff in den Antriebsmotor und die Bremse des Kraftfahrzeugs.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem mit einer Mehrzahl von Sensoren aufweist;
- Fig. 2: eine Verkehrssituation, in welcher eine Parkfläche zum Parken des Kraftfahrzeugs zwischen einer Fahrbahnmarkierung und einem Objekt bestimmt wird;
- Fig. 3: eine Verkehrssituation gemäß Fig. 2 in einer weiteren Ausführungsform; und
- Fig. 4: eine Verkehrssituation, in welcher die Parkfläche zwischen zwei Objekten bestimmt wird.

In den Figuren werden gleichen und funktionsgleiche Elemente mit den gleichen Bezugszeichen versehen.

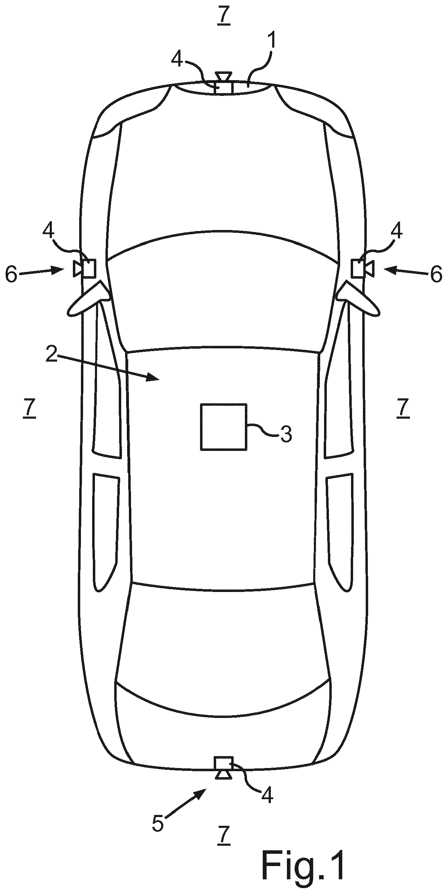

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 dient dazu, einen Fahrer des Kraftfahrzeugs 1 beim Einparken des Kraftfahrzeugs 1 zu unterstützen.

Das Fahrerassistenzsystem 2 umfasst wiederum eine Steuereinrichtung 3, die beispielsweise durch ein elektronisches Steuergerät des Kraftfahrzeugs 1 gebildet sein kann. Darüber hinaus umfasst das Fahrerassistenzsystem 2 zumindest einen Sensor 4, mit dem Objekte in einem Umgebungsbereich 7 des Kraftfahrzeugs 1 erfasst werden können. Der zumindest einen Sensor 4 umfasst bevorzugt eine Kamera. In dem vorliegenden Ausführungsbeispiel umfasst das Fahrerassistenzsystem 2 vier Sensoren 4, die verteilt an dem Kraftfahrzeug 1 angeordnet sind. Vorliegend ist einer der Sensoren 4 in einem Heckbereich 5 des Kraftfahrzeugs 1 angeordnet, einer der Sensoren 4 ist in einem Frontbereich des Kraftfahrzeugs 1 angeordnet und die übrigen zwei Sensoren 4 sind in einem jeweiligen Seitenbereich 6, insbesondere in einem Bereich der Seitenspiegel, angeordnet. Die Anzahl und Anordnung der Sensoren 4 des Fahrerassistenzsystems 2 ist vorliegend rein beispielhaft zu verstehen.

Mit den Sensoren 4 werden jeweils Sensordaten bereitgestellt, welche den Umgebungsbereich 7 beschreiben. Insbesondere können mit den Sensoren 4 eine Bildsequenz oder Videodaten bereitgestellt werden, welche den Umgebungsbereich 7 beschreiben. Diese Videodaten können von den Kameras an die Steuereinrichtung 3 übertragen werden. Mittels der Steuereinrichtung 3 können die Bilder ausgewertet werden. Die Steuereinrichtung 3 kann beispielsweise eine entsprechende Bildverarbeitungseinrichtung umfassen, mittels welcher Objekte in dem Bildern erkannt werden können. Es kann auch vorgesehen sein, dass jeder dem der Sensoren 4 eine separate Steuereinrichtung 3 zugeordnet ist.

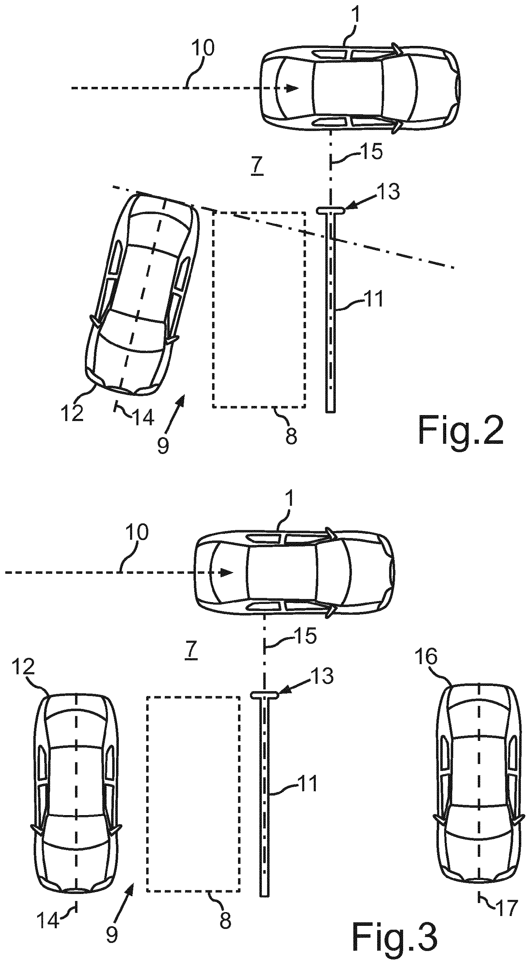

Fig. 2 zeigt eine Verkehrssituation, bei welcher eine Parkfläche 8 zum Einparken des Kraftfahrzeugs 1 bestimmt wird, gemäß einer ersten Ausführungsform. Zum Bestimmen der Parkfläche 8 wird zunächst eine potentielle Parklücke 9 in dem Umgebungsbereich 7 des Kraftfahrzeugs 1 erkannt. Zu diesem Zweck wird das Kraftfahrzeug 1 an der potentiellen Parklücke 9 vorbeibewegt. Vorliegend wird das Kraftfahrzeug 1 entlang der Richtung eines Pfeils 10 bewegt. Während des Vorbeibewegens des Kraftfahrzeugs 1 an der potentiellen Parklücke 9 wird der Umgebungsbereich 7 kontinuierlich mit den Sensoren 4 beziehungsweise den Kameras erfasst. Mit Hilfe eines entsprechenden Objekterkennungsalgorithmus kann dann eine Fahrbahnmarkierung 11 erkannt werden. Zudem können Objekte 12 erkannt werden, welche die potentielle Parklücke 9 begrenzen.

Bei dem Objekt 12 handelt es sich vorliegend um ein geparktes Fahrzeug. Weiterhin kann überprüft werden, ob es sich bei der Fahrbahnmarkierung 11 um eine Parkflächenmarkierung handelt, mittels welcher üblicherweise potentielle Parklücken 9 begrenzt werden. Hierzu kann beispielsweise überprüft werden, ob die Fahrbahnmarkierung 11 einen T-förmigen Bereich 13 oder einen L-förmigen Bereich aufweist. In dem vorliegenden Ausführungsbeispiel umfasst die Fahrbahnmarkierung 11 einen T-förmigen Bereich 13.

Weiterhin wird zunächst eine Orientierung der Parkfläche 8 innerhalb der potentiellen Parklücke 9 bestimmt. Zu diesem Zweck kann zunächst die räumliche Erstreckung beziehungsweise eine Haupterstreckungsrichtung 15 der Fahrbahnmarkierung 11 bestimmt werden. Anschließend kann es vorgesehen sein, dass die Parkfläche 8 parallel zu der Fahrbahnmarkierung 11, seitlich zu der Fahrbahnmarkierung 11 und/oder längs zu der Fahrbahnmarkierung 11 orientiert wird. Somit kann eine Orientierung der Parkfläche 8 definiert werden. Anschließend kann eine Orientierung des Objekts 12 bestimmt werden. Die Orientierung des Objekts 12 kann beispielsweise anhand der räumlichen Abmessungen und/oder einer Haupterstreckungsrichtung 14 des Objekts 12 bestimmt werden. Ferner kann dann die Orientierung der Parkfläche 8 und die Orientierung des Objekts 12 verglichen werden. Hierzu kann beispielsweise ein Winkel zwischen der Haupterstreckungsrichtung 15 der Parkfläche 8 beziehungsweise der Fahrbahnmarkierung 11 und der Haupterstreckungsrichtung 14 des Objekts 12 bestimmt werden. Dieser Winkel kann mit einem vorbestimmten Grenzwert verglichen werden. In dem vorliegenden Ausführungsbeispiel ist der Winkel größer als ein vorbestimmter Grenzwert. Somit wird die Parkfläche 8 nicht zwischen dem Objekt 12 und der Fahrbahnmarkierung 11 definiert. Es handelt sich also nicht um eine Parklücke 9 für das Kraftfahrzeug 1.

Fig. 3 zeigt eine weitere Verkehrssituation, bei welcher sich in dem Umgebungsbereich 7 des Kraftfahrzeugs 1 ein erstes Objekt 12 und ein zweites Objekt 16 befinden. Zwischen dem ersten Objekt 12 und dem zweiten Objekt 16 befindet sich zudem eine Fahrbahnmarkierung 11. Anhand der Erstreckungsrichtung 15 der Fahrbahnmarkierung 11 kann die Orientierung für die Parkfläche 8 definiert werden. Ferner kann anhand der Haupterstreckungsrichtung 14 des ersten Objekts 12 und/oder einer Haupterstreckungsrichtung 17 des zweiten Objekts 16 ein Typ der Parklücke 9 bestimmt werden. Vorliegend handelt es sich um eine Parklücke 9 zum Querparken des Kraftfahrzeugs 1. Wenn hier ein objektorientiertes System zum Bestimmen der Parkfläche 8 verwendet worden wäre, könnte die Parklücke 9 fälschlicherweise als Parklücke zum Längsparken erkannt worden sein.

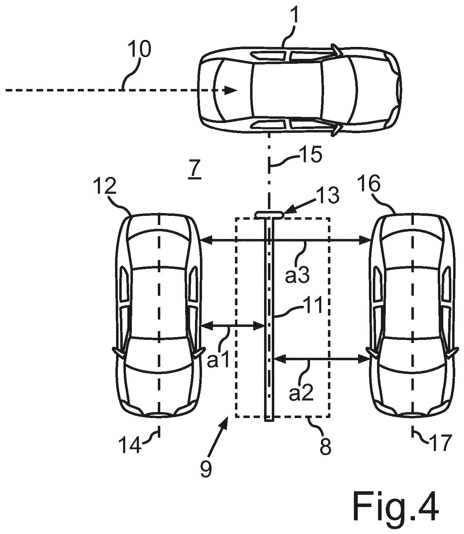

Fig. 4 zeigt eine weitere Verkehrssituation, bei der sich ein erstes Objekt 12 und ein zweites Objekt 16 in dem Umgebungsbereich 7 befinden. Zudem ist zwischen dem ersten Objekt 12 und dem zweiten Objekt 16 eine Fahrbahnmarkierung 11 angeordnet. Hierbei können zunächst die Abstände a1, a2, a3 zwischen den Objekten 12, 16 und/oder der Fahrbahnmarkierung 11 bestimmt werden. Beispielsweise kann zunächst ein erster Abstand a1 zwischen dem ersten Objekt 12 und der Fahrbahnmarkierung 11 bestimmt werden. Dieser Abstand a1 kann dann mit einem Schwellenwert verglichen werden. Dieser Schwellenwert kann beispielsweise anhand der äußeren Abmessungen des Kraftfahrzeugs 1 bestimmt werden. Vorliegend ist der Abstand a1 zu gering, um das Kraftfahrzeug 1 zwischen dem ersten Objekt 12 und der Fahrbahnmarkierung 11 zu parken. Anschließend kann ein zweiter Abstand a2 zwischen der Fahrbahnmarkierung 11 und dem zweiten Objekt 16 bestimmt werden. Auch dieser Abstand a2 ist zu gering, um das Kraftfahrzeug 1 zwischen der Fahrbahnmarkierung 11 und dem zweiten Objekt 16 zu parken. Im Anschluss daran kann ein Abstand a3 zwischen dem ersten Objekt 12 und dem zweiten Objekt 16 bestimmt werden. Dieser Abstand a3 ist größer als der Schwellenwert und somit geeignet, um das Kraftfahrzeug 1 zwischen dem ersten Objekt 12 und dem zweiten Objekt 16 zu parken. Somit wird die Parkfläche 8 zwischen dem ersten Objekt 12 und dem zweiten Objekt 16 definiert. In diesem Fall wird die Fahrbahnmarkierung 11 als Begrenzung für die Parklücke 9 ignoriert.

Die Beispiele gemäß den Fig. 2 bis 4 beschreiben jeweils das Definieren einer Parkfläche 8 innerhalb einer potentiellen Parklücke 9, die zum Querparken des Kraftfahrzeugs 1 ausgebildet ist. Die beschriebenen Beispiele können natürlich auf Parklücken 9 zum Längsparken oder zum Schrägparken übertragen werden. Grundsätzlich kann das Kraftfahrzeug 1 vorwärts oder rückwärts in die potentiellen Parklücken 9 eingeparkt werden. Es kann auch vorgesehen sein, dass das Verfahren durchgeführt wird, wenn das Kraftfahrzeug 1 in die potentielle Parklücke 9 hineinbewegt wird. Dies ist beispielsweise der Fall, wenn das Kraftfahrzeug 1 vorwärts in die potentielle Parklücke 9 eintaucht. Dies eignet sich insbesondere wenn die potentielle Parklücke 9 zum Querparken ausgebildet ist.

## Patentansprüche

1. Verfahren zum Bestimmen einer Parkfläche (8) zum Parken eines Kraftfahrzeugs (1), bei welchem das Kraftfahrzeug (1) relativ zu einer potentiellen Parklücke (9) beibewegt wird, während des Bewegens des Kraftfahrzeugs (1) relativ zu der potentiellen Parklücke (9) anhand von Sensordaten zumindest eines Sensors (4) des Kraftfahrzeugs (1) eine Fahrbahnmarkierung (11) und zumindest ein die potentielle Parklücke (9) begrenzendes Objekt (12, 16) erkannt werden und anhand der erkannten Fahrbahnmarkierung (11) und des zumindest einen Objekts (12, 16) die Parkfläche (8) innerhalb der potentiellen Parklücke (9) bestimmt wird,
wobei anhand der Fahrbahnmarkierung (11) eine Orientierung für die Parkfläche (8) bestimmt wird, eine Orientierung des zumindest einen Objekts (12, 16) bestimmt wird, **dadurch gekennzeichnet, dass** die Parkfläche (8) in Abhängigkeit von einem Vergleich der bestimmten Orientierung für die Parkfläche (8) und der bestimmten Orientierung des zumindest einen Objekts (12, 16) bestimmt wird, wobei die Fahrbahnmarkierung als Parkflächenmarkierung ausgebildet ist.

2. Verfahren nach Anspruch 1,
**dadurch gekennzeichnet, dass**
zum Vergleich der bestimmten Orientierung für die Parkfläche (8) und der bestimmten Orientierung des zumindest einen Objekts (12, 16) ein Winkel zwischen einer Haupterstreckungsrichtung (15) der Fahrbahnmarkierung (11) und einer Haupterstreckungsrichtung (14) des zumindest einen Objekts (12, 16) bestimmt wird.

3. Verfahren nach Anspruch 2,
**dadurch gekennzeichnet, dass**
die Parkfläche (8) innerhalb der potentiellen Parklücke (9) bestimmt wird, falls der bestimmte Winkel einen vorbestimmten Grenzwert unterschreitet.

4. Verfahren nach einem der vorhergehenden Ansprüche,
**dadurch gekennzeichnet, dass**
anhand bestimmten Orientierung für die Parkfläche (8) und der bestimmten Orientierung des zumindest einen Objekts (12, 16) ein Typ der potentiellen Parklücke (9) erkannt wird.

5. Verfahren nach einem der vorhergehenden Ansprüche,
**dadurch gekennzeichnet, dass**
ein Abstand (a1, a2) zwischen der Fahrbahnmarkierung (11) und dem zumindest einen Objekt (12, 16) bestimmt wird und die Parkfläche (8) innerhalb der potentiellen Parklücke (9) bestimmt wird, falls der Abstand (a1, a2) einen vorbestimmten Schwellenwert überschreitet.

6. Verfahren nach Anspruch 5,
**dadurch gekennzeichnet, dass**
ein Abstand (a3) zwischen einem ersten Objekt (12) und einem zweiten Objekt (16) bestimmt wird, falls der Abstand (a1) zwischen der Fahrbahnmarkierung (11) und dem ersten Objekt (12) und der Abstand (a2) zwischen der Fahrbahnmarkierung (11) und dem zweiten Objekt (16) den Schwellwert unterschreitet.

7. Verfahren nach Anspruch 6,
**dadurch gekennzeichnet, dass**
die Parkfläche (8) innerhalb der potentiellen Parklücke (9) bestimmt wird, falls der Abstand (a3) zwischen dem ersten Objekt (12) und dem zweiten Objekt (16) den vorbestimmten Schwellenwert überschreitet.

8. Verfahren nach einem der vorhergehenden Ansprüche,
**dadurch gekennzeichnet, dass**
zum Bestimmen der Parkfläche (8) eine räumliche Erstreckungen der Fahrbahnmarkierung (11) bestimmt wird und die Parkfläche (8) in Abhängigkeit von der räumlichen Erstreckung der Fahrbahnmarkierung (11) ausgerichtet wird.

9. Verfahren nach einem der vorhergehenden Ansprüche,
**dadurch gekennzeichnet, dass**
die Fahrbahnmarkierung (11) und das zumindest eine Objekt (12, 16) in eine digitale Umgebungskarte eingetragen werden, welche einen Umgebungsbereich (7) des Kraftfahrzeugs (1) beschreibt.

10. Fahrerassistenzsystem (2) für ein Kraftfahrzeug (1), welches zum Durchführen eines Verfahrens nach einem der vorhergehenden Ansprüche ausgelegt ist.

11. Kraftfahrzeug (1) mit einem Fahrerassistenzsystem (2) nach Anspruch 10.

## Claims

1. Method for determining a parking area (8) for parking a motor vehicle (1), in which the motor vehicle (1) is moved in relation to a potential parking space (9), a driving surface marking (11) and at least one object (12, 16) delimiting the potential parking space (9) are detected during the movement of the motor vehicle (1) in relation to the potential parking space (9) on the basis of sensor data from at least one sensor (4) of the motor vehicle (1), and the parking area (8) within the potential parking space (9) is determined on the basis of the detected driving surface marking (11) and the at least one object (12, 16),
wherein, on the basis of the driving surface marking (11), an orientation for the parking area (8) is determined, an orientation of the at least one object (12, 16) is determined, **characterized in that** the parking area (8) is determined in dependence on a comparison between the determined orientation for the parking area (8) and the determined orientation of the at least one object (12, 16), wherein the driving surface marking is designed as a parking area marking.

2. Method according to Claim 1,
**characterized in that**
an angle between a main direction of extent (15) of the driving surface marking (11) and a main direction of extent (14) of the at least one object (12, 16) is determined for comparing the determined orientation for the parking area (8) and the determined orientation of the at least one object (12, 16).

3. Method according to Claim 2,
**characterized in that**
the parking area (8) within the potential parking space (9) is determined if the determined angle falls below a predetermined threshold value.

4. Method according to any of the preceding claims,
**characterized in that**
a type of the potential parking space (9) is detected on the basis of the determined orientation for the parking area (8) and the determined orientation of the at least one object (12, 16).

5. Method according to any of the preceding claims,
**characterized in that**
a distance (a1, a2) between the driving surface marking (11) and the at least one object (12, 16) is determined, and the parking area (8) within the potential parking space (9) is determined if the distance (a1, a2) exceeds a predetermined threshold value.

6. Method according to Claim 5,
**characterized in that**
a distance (a3) between a first object (12) and a second object (16) is determined if the distance (a1) between the driving surface marking (11) and the first object (12) and the distance (a2) between the driving surface marking (11) and the second object (16) fall below the threshold value.

7. Method according to Claim 6,
**characterized in that**
the parking area (8) within the potential parking space (9) is determined if the distance (a3) between the first object (12) and the second object (16) exceeds the predetermined threshold value.

8. Method according to any of the preceding claims,
**characterized in that**,
for determining the parking area (8), a spatial extent of the driving surface marking (11) is determined and the parking area (8) is aligned in dependence on the spatial extent of the driving surface marking (11).

9. Method according to any of the preceding claims,
**characterized in that**
the driving surface marking (11) and the at least one object (12, 16) are entered into a digital map of the surroundings, which describes a surrounding area (7) of the motor vehicle (1).

10. Driver assistance system (2) for a motor vehicle (1), which is designed for carrying out a method according to any of the preceding claims.

11. Motor vehicle (1) having a driver assistance system (2) according to Claim 10.

## Revendications

1. Procédé permettant de déterminer une place de stationnement (8) destinée au stationnement d'un véhicule automobile (1), dans lequel le véhicule automobile (1) est rapproché d'un espace de stationnement potentiel (9), pendant le déplacement du véhicule automobile (1) par rapport à l'espace de stationnement potentiel (9), un marquage au sol (11) et au moins un objet (12, 16) délimitant l'espace de stationnement potentiel (9) sont identifiés à l'aide de données de capteur d'au moins un capteur (4) du véhicule automobile (1), et à l'aide du marquage au sol (11) identifié et du au moins objet (12, 16), la place de stationnement (8) est déterminée à l'intérieur de l'espace de stationnement potentiel (9), dans lequel, à l'aide du marquage au sol (11), une orientation pour la place de stationnement (8) est déterminée et une orientation du au moins un objet (12, 16) est déterminée,
**caractérisé en ce que** la place de stationnement (8) est déterminée en fonction d'une comparaison de l'orientation déterminée pour la place de stationnement (8) et de l'orientation déterminée du au moins un objet (12, 16), le marquage au sol étant réalisé comme le marquage au sol d'une place de stationnement.

2. Procédé selon la revendication 1, **caractérisé en ce que** pour la comparaison de l'orientation déterminée pour la place de stationnement (8) et de l'orientation déterminée du au moins un objet (12, 16), un angle entre une direction d'extension principale (15) du marquage au sol (11) et d'une direction d'extension principale (14) du au moins un objet (12, 16) est déterminé.

3. Procédé selon la revendication 2, **caractérisé en ce que** la place de stationnement (8) est déterminée à l'intérieur de l'espace de stationnement potentiel (9) si l'angle déterminé est inférieur à une valeur limite prédéterminée.

4. Procédé selon l'une quelconque des revendications précédentes, **caractérisé en ce qu'**à l'aide de l'orientation déterminée pour la place de stationnement (8) et de l'orientation déterminée du au moins un objet (12, 16), un type de l'espace de stationnement potentiel (9) est identifié.

5. Procédé selon l'une quelconque des revendications précédentes, **caractérisé en ce qu'**une distance (a1, a2) entre le marquage au sol (11) et ledit au moins un objet (12, 16) est déterminée, et la place de stationnement (8) est déterminée à l'intérieur de l'espace de stationnement potentiel (9) si la distance (a1, a2) dépasse une valeur seuil prédéterminée.

6. Procédé selon la revendication 5, **caractérisé en ce qu'**une distance (a3) entre un premier objet (12) et un deuxième objet (16) est déterminée, si la distance (a1) entre le marquage au sol (11) et le premier objet (12) et la distance (a2) entre le marquage au sol (11) et le deuxième objet (16) est inférieure à la valeur seuil.

7. Procédé selon la revendication 6, **caractérisé en ce que** la place de stationnement (8) est déterminée à l'intérieur de l'espace de stationnement potentiel (9) si la distance (a3) entre le premier objet (12) et le deuxième objet (16) dépasse la valeur seuil prédéterminée.

8. Procédé selon l'une quelconque des revendications précédentes, **caractérisé en ce que** pour la détermination de la place de stationnement (8), une étendue spatiale du marquage au sol (11) est déterminée, et la place de stationnement (8) est alignée en fonction de l'étendue spatiale du marquage au sol (11).

9. Procédé selon l'une quelconque des revendications précédentes, **caractérisé en ce que** le marquage au sol (11) et ledit au moins un objet (12, 16) sont inscrits sur une carte d'environnement numérique qui décrit la zone d'environnement (7) du véhicule automobile (1).

10. Système d'assistance au conducteur (2) pour un véhicule automobile (1) qui est conçu pour exécuter un procédé selon l'une quelconque des revendications précédentes.

11. Véhicule automobile (1) comprenant un système d'assistance au conducteur (2) selon la revendication 10.
